# EUROPEAN PATENT APPLICATION

(11) **EP 4 450 242 A2**
(43) Date of publication of application: **23.10.2024**
(21) Application number: 24169774.7
(22) Date of filing: 11.04.2024
(51) Int. Cl.: B26D 7/18, B26F 1/40, B26F 1/44, B26F 3/00

(54) **PUSH-BREAKING DEVICE, METHOD OF MANUFACTURING LAYERED ELECTRODE, AND METHOD OF MANUFACTURING LAMINATED BATTERY**

(30) Priority: 19.04.2023 JP 2023068857
(71) Applicant: TOYOTA JIDOSHA KABUSHIKI KAISHA, Toyota-shi, Aichi-ken, 471-8571 (JP)
(72) Inventor: HIDAKA, Yutaka, Toyota-shi, 471-8571 (JP); KAKISHITA, Kenichi, Toyota-shi, 471-8571 (JP)
(74) Representative: D Young & Co LLP

(57) **Abstract**

A push-breaking device of the present disclosure has: a placement stand on which a layered electrode sheet is placed; a pressing mechanism pressing the layered electrode sheet; and at least one cutting blade tool. By the cutting blade tool, which moves along a first direction with respect the placement stand, the push-breaking device of the present disclosure pushes and bends, and breaks, a portion of a protruding region, which protrudes outward from the placement stand and the pressing mechanism, of the layered electrode sheet, which is pressed by the pressing mechanism in a second direction that is orthogonal to the first direction. An angle of a blade portion of the cutting blade tool with respect to the second direction is 15°-30°. An angle of the blade portion with respect to the first direction is an acute angle. A length, in the second direction, of a clearance between the blade portion and an end, at the cutting blade tool side, of the placement stand is 10%-35% of a length of the layered electrode sheet in the first direction.

## Description

### BACKGROUND

### Technical Field

The present disclosure relates to a push-breaking device, a method of manufacturing a layered electrode, and a method of manufacturing a laminated battery.

### Related Art

The demand for high-output lithium secondary batteries as large-sized energy sources of electric vehicles and the like has increased in recent years. Generally, in manufacturing lithium secondary batteries, regions that do not function as power generating elements of the lithium secondary battery (e.g., regions of coating omission, regions where layers are misaligned, and the like) are cut off from the standpoint of improving the energy density.

Japanese Patent Application Laid-Open (JP-A) No. 2015-153538 discloses an electrode cutting device. The cutting device disclosed in JP-A No. 2015-153538 cuts a sheet-shaped electrode in which an active material layer is provided on a foil-like collector, by a shearing operation that is based on the meshing of an upper blade and a lower blade, which are linear blades and are disposed so as to face one another, and results from the action of the upper blade and the lower blade approaching and moving apart from one another. At the upper blade, the outer corner portion that is formed by the blade side surface and the work contacting surface of the upper blade is the cutting edge. The blade tip angle of this cutting edge is set to be 90°. A specific relief surface is formed at the upper blade. Specifically, there is no clearance between the lower blade and the upper blade.

The operational steps of the cutting device disclosed in JP-A No. 2015-153538 are illustrated in Fig. 11A through Fig. 11C. In Fig. 11A through Fig. 11C, reference numeral 901 is a collector, reference numeral 902 is an active material layer, and reference numeral 903 is an active material layer.

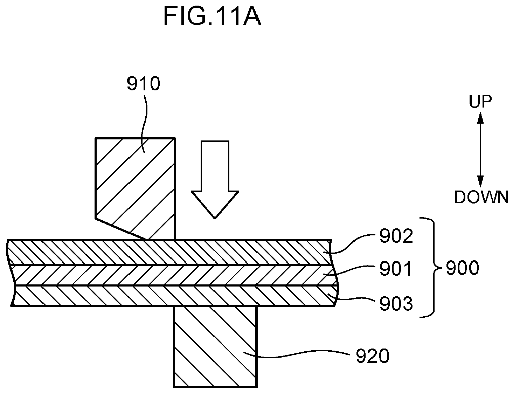

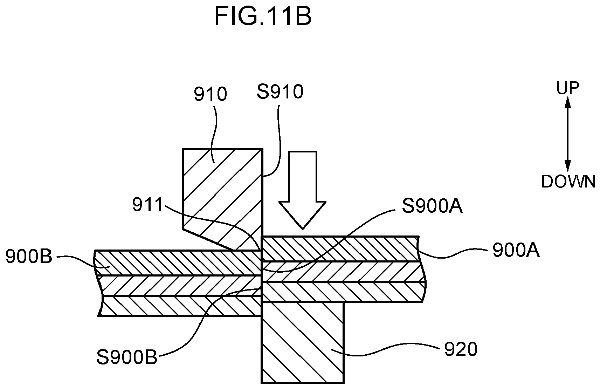

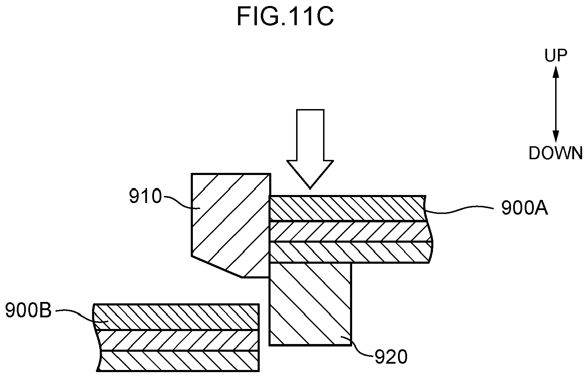

In JP-A No. 2015-153538, electrode base material 900 is placed between upper blade 910 and lower blade 920 that are apart in the vertical direction. Due to the upper blade 910 being lowered, the electrode base material 900 is separated into a first electrode 900A and a second electrode 900B. In detail, when the upper blade 910 is lowered, as illustrated in Fig. 11A, the upper blade 910 contacts the electrode base material 900. Thereafter, as illustrated in Fig. 11B, the upper blade 910 pushes the electrode base material 900 down. Thereafter, as illustrated in Fig. 11C, cutting edge 911 of the upper blade 910 meshes with cutting edge 921 of the lower blade 920. At this time, an electrode 930 is cut from the electrode base material 900 due to the shearing action that is based on the meshing-together of the cutting edge 911 of the upper blade 910 and the cutting edge 921 of the lower blade 920.

However, in cutting the electrode base material 900 by using the cutting device disclosed in JP-A No. 2015-153538, as illustrated in Fig. 11B and Fig. 11C, there is the concern that sheared surface S900A of the first electrode 900A and blade side surface S910 of the upper blade 910 will rub against one another. Moreover, there is the concern that the sheared surface S900A of the first electrode 900A and sheared surface S900B of the second electrode 900B will rub against one another. Due thereto, there is the concern that, at the surface of the sheared surface S900A of the first electrode 900A, the structural layers will commingle, and short circuiting between the structural layers of the first electrode 900A (hereinafter also called "inter-layer short circuiting") will occur.

### SUMMARY

The present disclosure was made in view of the above-described circumstances.

A topic that embodiments of the present disclosure address is the provision of a push-breaking device, a method of manufacturing a layered electrode, and a method of manufacturing a laminated battery that can separate a layered electrode sheet into desired dimensions while suppressing the occurrence of inter-layer short circuiting and the generation of cracks.

Means for addressing the above-described topic include the following aspects.
<1> A push-breaking device of a first aspect of the present disclosure is a push-breaking device, including:
   a placement stand on which a layered electrode sheet is placed;
   a pressing mechanism pressing the layered electrode sheet placed on the placement stand; and
   at least one cutting blade tool,
   the push-breaking device configured such that by means of the at least one cutting blade tool, which moves relative to the placement stand along a first direction, the push-breaking device pushes and bends, and breaks, a portion of a protruding region, which protrudes outward from the placement stand and the pressing mechanism, of the layered electrode sheet, which is pressed by the pressing mechanism in a second direction that is orthogonal to the first direction, wherein:
      an angle of a blade portion of the cutting blade tool with respect to the second direction is from 15° to 30°,
      an angle of the blade portion with respect to the first direction is an acute angle, and
      a length, in the second direction, of a clearance between the blade portion and an end, at a side of the cutting blade tool, of the placement stand is from 10% to 35% of a length of the layered electrode sheet in the first direction.

The "layered electrode sheet" has at least a first active material sheet, a second active material sheet, and an insulative sheet that electrically insulates the first active material sheet and the second active material sheet. The insulative sheet is interposed between the first active material sheet and the second active material sheet in the first direction. The "blade portion" is formed from the rake surface of the cutting blade tool and the relief surface of the cutting blade tool.

In the first aspect, at the time of separating the layered electrode sheet at least in two, the cutting blade tool that moves relative to the placement stand along the first direction contacts the protruding region of the layered electrode sheet that is pressed by the pressing mechanism, and pushes and bends the protruding region. The blade portion of the cutting blade tool cuts into the surface of the protruding region in the state in which the protruding region is pushed and bent. Moreover, when the cutting blade tool moves along the first direction, a break whose origin is the region of the protruding region into which the blade portion of the cutting blade tool cuts (hereinafter, this region is also called a "cut-in line") is formed, and a portion of the protruding region is separated. Due thereto, a layered electrode from which the end portion (hereinafter called "offcut"), which is at the cutting blade tool side, of the layered electrode sheet is separated is obtained.

In the first aspect, the angle of the blade portion of the cutting blade tool with respect to the second direction (hereinafter also called "rake angle") is greater than or equal to 15°. Due thereto, as compared with a case in which the rake angle is less than 15°, it is easy for the blade portion of the cutting blade tool to cut into the protruding region. Therefore, it is easy for a break of the protruding region, whose origin is the cut-in lines, to form. In other words, it is difficult for the shape of the end, which is at the cutting blade tool side as seen from the first direction, of the obtained layered electrode to become sawtooth-shaped. As a result, the push-breaking device of the first aspect can separate the layered electrode sheet into desired dimensions.

In the first aspect, the rake angle is less than or equal to 30°. Due thereto, it is more difficult for the blade portion of the cutting blade tool to cut into the protruding region than in a case in which the rake angle exceeds 30°. Therefore, it is difficult for crush-cutting of the protruding region, which is carried out by the sharp blade portion itself, to be carried out. Namely, at the time when a portion of the protruding region is separated, it is difficult for the blade portion of the cutting blade tool and the separated surface of the protruding region to rub against one another. As a result, the push-breaking device of the first aspect can suppress the occurrence of inter-layer short circuiting.

In the first aspect, the angle of the blade portion of the cutting blade tool with respect to the first direction (hereinafter also called "relief angle") is an acute angle. Due thereto, it is more difficult for the separated surface of the obtained layered electrode to rub against the cutting blade tool than in a case in which the relief angle is not an acute angle. As a result, the push-breaking device of the first aspect can suppress the occurrence of inter-layer short circuiting.

In the first aspect, the length, in the second direction, of the clearance between the blade portion and the end, which is at the cutting blade tool side, of the placement stand (hereinafter also called "the length of the clearance") is greater than or equal to 10% of the length of the layered electrode sheet in the first direction. Due thereto, it is easier for the protruding region to be pushed and bent by the moving cutting blade tool than in a case in which the length of the clearance is less than 10% of the length of the layered electrode sheet in the first direction. Therefore, in the step of separating the offcut from the layered electrode sheet, it is difficult for the separated surface of the layered electrode to rub against the cutting blade tool and the offcut, respectively. As a result, the push-breaking device of the first aspect can suppress the occurrence of inter-layer short circuiting.

In the first aspect, the length of the clearance is less than or equal to 35% of the length of the layered electrode sheet in the first direction. As a result, the bending moment, whose center is a region of the protruding region that is in the vicinity of the cutting blade tool side end of the placement stand, is smaller than in a case in which the length of the clearance exceeds 35% of the length of the layered electrode sheet in the first direction. Namely, at the time when the moving cutting blade tool pushes and bends the protruding region, stress tends not to concentrate at the region of the layered electrode sheet that is in the vicinity of the cutting blade tool side end of the pressing mechanism. Therefore, cracks tend not to form at the surface of the region of the layered electrode sheet that is in the vicinity of the cutting blade tool side end of the pressing mechanism. If cracks arise in the layered electrode, there is the concern that the layered electrode will break when the layered electrode is charged and discharged.

Owing to the above, the push-breaking device of the first aspect can separate the layered electrode sheet into desired dimensions while suppressing the occurrence of inter-layer short circuiting and the generation of cracks.

<2> A push-breaking device of a second aspect of the present disclosure is the push-breaking device of <1>, wherein:
the pressing mechanism has a contacting member that contacts the layered electrode sheet when the pressing mechanism presses the layered electrode sheet, and
in the second direction, a position of an end, at a side of the cutting blade tool, of the contacting member is at a same position as a position of the end, at the cutting blade tool side, of the placement stand, or is a position that is further toward the cutting blade tool side than the position of the end, at the cutting blade tool side, of the placement stand.

In the second aspect, at the time when the moving cutting blade tool pushes and bends the protruding region, it is less likely that stress will concentrate at the region of the layered electrode sheet that is in the vicinity of the cutting blade tool side end of the pressing mechanism, than in a case in which the position of the cutting blade tool side end of the contacting member is a position that is further toward the opposite side from the cutting blade tool side than the position of the cutting blade tool side end of the placement stand in the second direction. As a result, the push-breaking device of the second aspect can separate the layered electrode sheet while better suppressing the generation of cracks.

<3> A push-breaking device of a third aspect of the present disclosure is the push-breaking device of <1> or <2>, wherein
an angle of the blade portion with respect to the first direction is from 5° to 15°.

In the third aspect, it is more difficult for the layered electrode, which is obtained by the offcuts being separated therefrom, to rub against the cutting blade tool than in a case in which the relief angle is outside of the range of 5° ~ 15°. As a result, the push-breaking device of the third aspect can separate the layered electrode sheet while better suppressing the occurrence of inter-layer short circuiting.

<4> A push-breaking device of a fourth aspect of the present disclosure is the push-breaking device of any one of <1> through <3>, wherein
a length of the clearance in the second direction is from 20 µm to 50 µm.

The push-breaking device of the fourth aspect can separate a specific layered electrode sheet into desired dimensions while suppressing the occurrence of inter-layer short circuiting and the generation of cracks, more so than in a case in which the length of the clearance is outside of the range of 20 µm ~ 50 µm. The specific layered electrode sheet is formed by first active material sheets, solid electrolyte sheets and second active material sheets being layered in that order along the first direction on both surfaces of a first collector sheet. The length (thickness) of the specific layered electrode sheet in the first direction is, for example, 0.2 mm.

<5> A push-breaking device of a fifth aspect of the present disclosure is the push-breaking device of any one of <1> through <4>, further including a lower die holder, and an upper die holder disposed so as to face the lower die holder and configured to move along the first direction relative to the lower die holder, wherein:
the first direction is parallel to a gravitational direction,
the cutting blade tool and the pressing mechanism are mounted at the upper die holder, and
the placement stand is mounted at the lower die holder.

In the fifth aspect, due to the layered electrode sheet being placed between the cutting blade tool and the placement stand that are apart in the first direction, and the upper die holder being lowered, the layered electrode sheet is pressed and restrained by the pressing mechanism, and a portion of the protruding region of the layered electrode sheet can be separated. As a result, the push-breaking device of the fifth aspect can efficiently separate the layered electrode sheet by a simple structure.

<6> A push-breaking device of a sixth aspect of the present disclosure is the push-breaking device of <5>, wherein
the cutting blade tool comprises an upper blade, and
the placement stand comprises a lower blade.

The push-breaking device of the sixth aspect can efficiently separate the layered electrode sheet.

<7> A method of manufacturing a layered electrode of a seventh aspect of the present disclosure is a method of manufacturing a layered electrode that manufactures a layered electrode by using the push-breaking device of any one of <1> through <6>, the method including:
preparing the layered electrode sheet;
placing the layered electrode sheet on the placement stand such that the protruding region is formed; and
moving the at least one cutting blade tool in the first direction, pushing and bending a portion of the protruding region, and breaking the layered electrode sheet.

The "layered electrode" means an electrode that is formed by sheet-shaped first active material layers, sheet-shaped insulating layers, sheet-shaped second active material layers, and second collectors being layered in that order along the first direction on the both surfaces of a sheet-shaped first collector. A first collector sheet, first active material sheets, insulating sheets, and second active material sheets that are included in the layered electrode sheet are broken, and become the first collector, the first active material layers, the insulating layers and the second active material layers that are included in the layered electrode. The "insulating layer" includes a solid electrolyte layer of a lithium secondary battery that uses a solid electrolyte, and the separator of a lithium secondary battery that uses a non-aqueous electrolyte.

The method of manufacturing an electrode of the seventh aspect can manufacture a layered electrode sheet that has desired dimensions, while better suppressing the occurrence of inter-layer short circuiting and the generation of cracks.

<8> A method of manufacturing a layered electrode of an eighth aspect of the present disclosure is the method of manufacturing an electrode of <7>, wherein:
the layered electrode sheet is formed by a first active material sheet, a solid electrolyte sheet and a second active material sheet being layered in this order along the first direction on both surfaces of a first collector sheet, and
the method further includes layering a second collector on a second active material layer obtained from the second active material sheet as a result of implementation of the push-breaking.

The method of manufacturing a layered electrode of the eighth aspect can manufacture a layered electrode that has desired dimensions, while suppressing the occurrence of inter-layer short circuiting and the generation of cracks.

<9> A method of manufacturing a laminated battery, the method of a ninth aspect of the present disclosure is a method of manufacturing a laminated battery including manufacturing a layered electrode by the method of manufacturing a layered electrode of <7> or <8>.

The "laminated battery" means a battery that includes at least one layered electrode.

The method of manufacturing a laminated battery of the ninth aspect can manufacture a laminated battery having a laminated electrode in which the occurrence of inter-layer short circuiting and the generation of cracks are suppressed and that has desired dimensions.

In accordance with the present disclosure, there are provided a push-breaking device, a method of manufacturing a layered electrode, and a method of manufacturing a laminated battery that can separate a layered electrode sheet into desired dimensions while suppressing the occurrence of inter-layer short circuiting and the generation of cracks.

### BRIEF DESCRIPTION OF THE DRAWINGS

Exemplary embodiments of the present invention will be described in detail based on the following figures, wherein:
Fig. 1 is a cross-sectional view of a push-breaking device relating to an embodiment of the present disclosure;
Fig. 2 is a cross-sectional view of an upper blade and a lower blade in the embodiment of the present disclosure;
Fig. 3 is a cross-sectional view of the push-breaking device relating to the embodiment of the present disclosure;
Fig. 4 is a cross-sectional view of the upper blade and the lower blade in the embodiment of the present disclosure;
Fig. 5 is a cross-sectional view of the upper blade and the lower blade in the embodiment of the present disclosure;
Fig. 6 is a cross-sectional view of the push-breaking device relating to the embodiment of the present disclosure;
Fig. 7 is a cross-sectional view of the upper blade and the lower blade in the embodiment of the present disclosure;
Fig. 8 is a cross-sectional view of a layered electrode sheet in the embodiment of the present disclosure;
Fig. 9 is a top view of a layered electrode of a comparative example;
Fig. 10 is a top view of the layered electrode of the comparative example;
Fig. 11A is a drawing for explaining an operational step of a conventional cutting device;
Fig. 11B is a drawing for explaining an operational step of the conventional cutting device; and
Fig. 11C is a drawing for explaining an operational step of the conventional cutting device.

### DETAILED DESCRIPTION

In the present disclosure, numerical value ranges expressed by using "~" mean ranges in which the numerical values listed before and after the "~" are included as the minimum value and maximum value, respectively. In numerical value ranges that are expressed in a stepwise manner in the present disclosure, the upper limit value or the lower limit value listed in a given numerical value range may be substituted by the upper limit value or the lower limit value of another numerical value range that is expressed in a stepwise manner. In the present disclosure, combinations of two or more preferable aspects are more preferable aspects. In the present disclosure, the term "step" is not only an independent step and includes steps that, in a case in which that step cannot be clearly distinguished from another step, achieve the intended object of that step.

Embodiments of a push-breaking device, a method of manufacturing a layered electrode, and a method of manufacturing a laminated battery of the present disclosure are described hereinafter with reference to the drawings. In the drawings, the same or corresponding portions are denoted by the same reference numerals, and description is not repeated.

### (1) Push-Breaking Device

Push-breaking device 1 relating to an embodiment of the present disclosure pushes and bends a layered electrode sheet 4 and breaks the layered electrode sheet 4. A layered electrode precursor 40 is obtained thereby. At the layered electrode precursor 40, regions 41 that do not function as a power generating elements (hereinafter also called "offcuts 41"), are removed from the layered electrode sheet 4. Details of the layered electrode sheet 4 are described later.

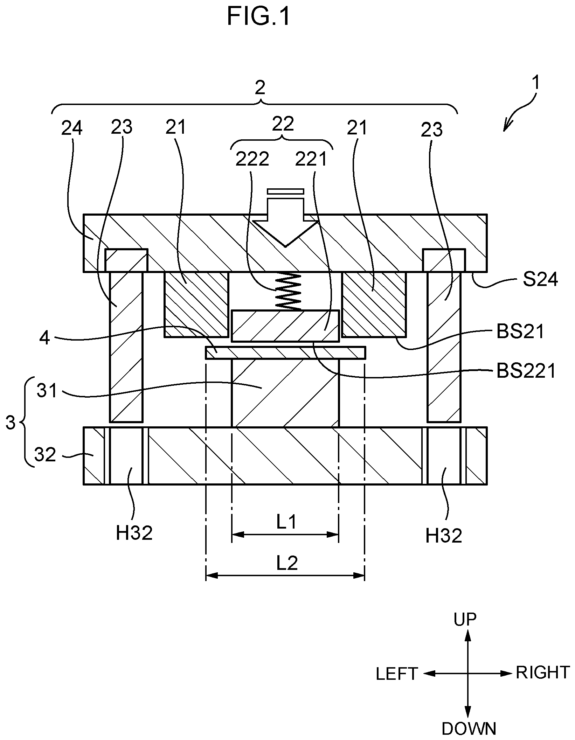

As illustrated in Fig. 1, the push-breaking device 1 has an upper die 2 and a lower die 3. The upper die 2 is disposed so as to face the lower die 3. The upper die 2 can move relatively along the gravitational direction with respect to the lower die 3. The upper die 2 has two upper blades 21 that are linear and are examples of the at least one cutting blade tool.

In the present embodiment, the gravitational direction is defined as the lower side, and the side opposite thereto is defined as the upper side. The side of one of the two upper blades 21 is defined as the right side, and the side opposite thereto is defined as the left side. One side in the longitudinal direction of the upper blades 21 is defined as the front side, and the side opposite thereto is defined as the rear side. The vertical direction that is an example of the first direction, the left-right direction that is an example of the second direction, and the front-rear direction are orthogonal to one another. Note that these directions do not limit the directions at the time when the push-breaking device of the present disclosure is used.

### (1.1) Upper Die

The upper die 2 has the two upper blades 21, a pressing mechanism 22, plural guide pins 23 and an upper die holder 24. The two upper blades 21, the pressing mechanism 22 and the plural guide pins 23 are mounted at the upper die holder 24. The pressing mechanism 22 is positioned at the central portion of the upper die holder 24 in the left-right direction. The two upper blades 21 are positioned so as to be adjacent to the both sides of the pressing mechanism 22 in the left-right direction. The plural guide pins 23 are positioned at the outer sides of the pressing mechanism 22 in the left-right direction.

### (1.1.1) Upper Blades

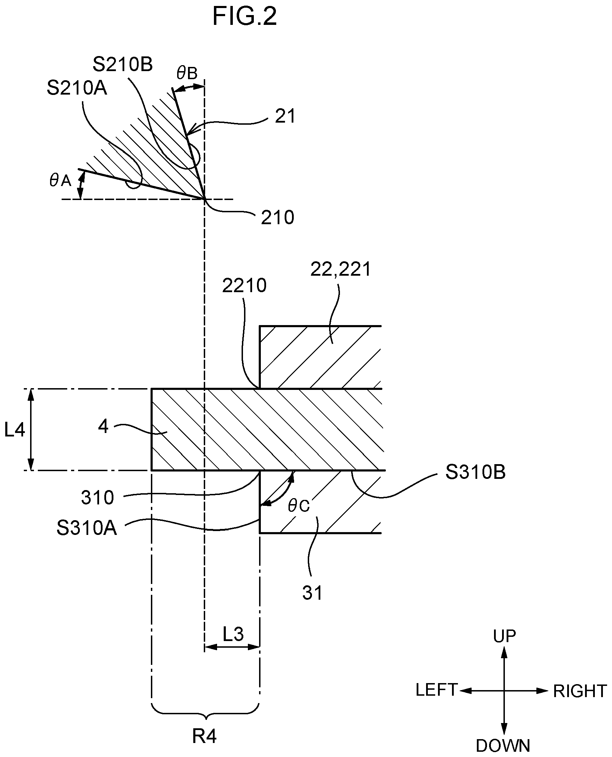

As illustrated in Fig. 2, the upper blades 21 are wedge-shaped objects. The upper blade 21 has a blade portion 210 that extends in the front-rear direction. A rake surface S210A and a relief surface S210B are formed at the upper blade 21. The blade portion 210 is formed from the rake surface S210A and the relief surface S210B.

Angle θA of the blade portion 210 of the upper blade 21 with respect to the left-right direction (hereinafter also called "rake angle θA") is 15° ~ 30°.

Angle θB of the blade portion 210 of the upper blade 21 with respect to the vertical direction (hereinafter also called "relief angle θB") is an acute angle. In the push-breaking device 1, the relief angle θB is 5° ~ 15°.

The length of the upper blade 21 in the front-rear direction is appropriately selected in accordance with the size of the layered electrode sheet 4 and the like, and may be longer than the length of the layered electrode sheet 4 in the front-rear direction. The material of the upper blade 21 is not particularly limited, and is appropriately selected in accordance with the type of the layered electrode sheet 4 and the like. Examples thereof are steel, ultra-hard metals and the like.

### (1.1.2) Pressing Mechanism

The pressing mechanism 22 presses the layered electrode sheet 4 that is disposed on a lower blade 31 that is included in the lower die 3. The pressing mechanism 22 has a contacting member 221 and an elastic member 222. The upper-side end portion of the elastic member 222 is fixed to the upper die holder 24. The lower-side end portion of the elastic member 222 is fixed to the contacting member 221.

The contacting member 221 contacts the layered electrode sheet 4 at the time when the pressing mechanism 22 presses the layered electrode sheet 4. The contacting member 221 is a flat-plate-shaped object. Length L1 (see Fig. 1) of the contacting member 221 in the left-right direction is shorter than length L2 (see Fig. 1) of the layered electrode sheet 4 in the left-right direction, and is appropriately selected in accordance with the length L2 of the layered electrode sheet 4. The material of the contacting member 221 is not particularly limited, and examples thereof are resin, metals and the like.

The elastic member 222 imparts urging force to the contacting member 221 at the time when the pressing mechanism 22 presses the layered electrode sheet 4. It suffices for the length of the elastic member 222 in the vertical direction to be a length such that, in the state in which the contacting member 221 is not contacting the layered electrode sheet 4, the position of lower portion BS221 of the contacting member 221 is positioned further toward the lower side than the position of lower portions BS21 of the upper blades 21. It suffices for the elastic member 222 to be a member that can extend and contract in the vertical direction, and a coil spring and the like are examples thereof. The material of the elastic member 222 is not particularly limited, and resin, metals and the like are examples thereof.

### (1.1.3) Guide Pins

The guide pins 23 are used for controlling the direction, in which the upper die 2 moves relative to the lower die 3, to be the vertical direction. The plural guide pins 23 respectively extend from lower surface S24 of the upper die holder 24 toward the lower side. It suffices for there to be at least two of the guide pins 23, and the number of the guide pins 23 is selected appropriately in accordance with the size of the layered electrode sheet 4. The material of the guide pins 23 is not particularly limited, and examples thereof are resin, metals and the like.

### (1.1.4) Upper Die Holder

The upper die holder 24 holds the two upper blades 21, the pressing mechanism 22 and the plural guide pins 23. The upper die holder 24 is a plate-shaped object. The material of the upper die holder 24 is selected appropriately in accordance with the size of the layered electrode sheet 4 and the like. The material of the upper die holder 24 is not particularly limited, and examples thereof are resin, metals and the like.

### (1.2) Lower Die

The lower die 3 has the lower blade 31 that is an example of the placement stand, and a lower die holder 32. The lower blade 31 is mounted at the lower die holder 32. The lower blade 31 is positioned at the central portion of the lower die holder 32 in the left-right direction.

### (1.2.1) Lower Blade

The layered electrode sheet 4 is placed on the lower blade 31. The lower blade 31 is a plate-shaped object. The lower blade 31 has blade portions 310 that are linear and extend in the front-rear direction. End surfaces S310A and a contacting surface S310B that contacts the layered electrode sheet 4 are formed at the lower blade 31. The blade portions 310 are formed from the end surfaces S310A and the contacting surface S310B. Angle θC formed by the end surface S310A and the contacting surface S310B is 90°. The length of the lower blade 31 in the front-rear direction is selected appropriately in accordance with the size of the layered electrode sheet 4 and the like, and it suffices for this length to be longer than the length of the layered electrode sheet 4 in the front-rear direction. The material of the lower blade 31 is not particularly limited and is selected appropriately in accordance with the type of the layered electrode sheet 4 and the like, and examples thereof are steel, ultra-hard metals, and the like.

### (1.2.2) Lower Die Holder

The lower die holder 32 holds the lower blade 31. The lower die holder 32 is a plate-shaped object. Plural guide holes H32 are formed in the lower die holder 32. The guide pins 23 of the upper die 2 are inserted in the guide holes H32. The guide holes H32 are formed along the vertical direction and pass-through the lower die holder 32. The respective positions of the plural guide holes H32 correspond to the respective positions of the plural guide pins 23. The material of the lower die holder 32 is not particularly limited, and examples thereof are resin, metals and the like.

### (1.3) Positional Relationships

Length L3 (see Fig. 2) in the left-right direction of the clearance between the blade portion 210 of the upper blade 21 and the upper blade 21 side end of the lower blade 31 (i.e., the blade portion 310) is 10% ~ 35% of length L4 (see Fig. 2) of the layered electrode sheet 4 in the left-right direction. In other words, at the push-breaking device 1, the length L3 of the clearance is 20 µm ~ 50 µm.

In the left-right direction, the position of end 2210, at a side of the upper blade 21, of the contacting member 221 is at the same position as the position of the end, at the upper blade 21 side, of the lower blade 31 (i.e., the blade portion 310).

### (1.4) Driving Means

The push-breaking device 1 may or may not have a known driving means (e.g., a hydraulic cylinder, a driving motor or the like). If the push-breaking device 1 has a driving means, the upper die 2 may be moved relative to the lower die 3 by the driving means. If the push-breaking device 1 does not have a driving means, the upper die 2 may be manually moved relative to the lower die 3.

### (1.5) Operation

Operation of the push-breaking device 1 is described with reference to Fig. 1 through Fig. 7.

First, as illustrated in Fig. 1, the upper die 2 and the lower die 3 are set apart in the vertical direction, and the layered electrode sheet 4 is placed on the lower blade 31 of the lower die 3.

Next, when the upper die 2 is moved toward the lower side, the respective guide pins 23 of the upper die 2 are inserted in the respective guide holes H32 of the lower die 3.

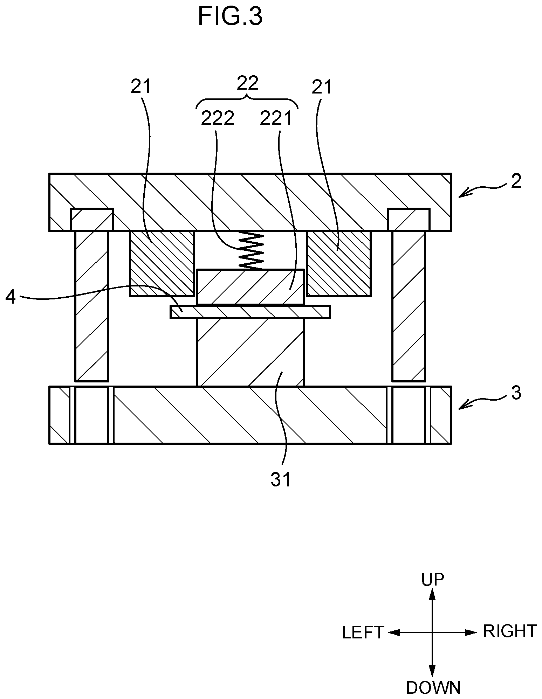

When the upper die 2 is moved further toward the lower side, as illustrated in Fig. 2 and Fig. 3, the contacting member 221 of the pressing mechanism 22 contacts the layered electrode sheet 4. Due thereto, the contacting member 221 of the pressing mechanism 22 presses and restrains the layered electrode sheet 4 due to the urging force of the elastic member 222. At this time, as illustrated in Fig. 2, both end portions R4 in the left-right direction of the layered electrode sheet 4 (hereinafter also called "protruding regions R4") protrude outward from the contacting member 221 of the pressing mechanism 22 and the lower blade 31. At this point in time, the upper blades 21 do not contact the layered electrode sheet 4.

Next, when the upper die 2 is moved further toward the lower side, the blade portions 210 of the upper blades 21 contact the protruding regions R4 of the layered electrode sheet 4 that is restrained by the pressing mechanism 22.

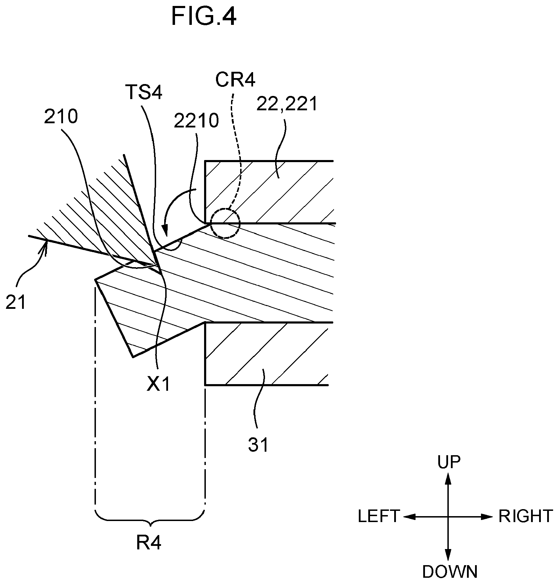

Next, when the upper die 2 is moved further toward the lower side, as illustrated in Fig. 4, the protruding regions R4 are, due to the pushing by the upper blades 21, pushed and bent toward the lower side following the movement of the upper blades 21. At this time, in the state in which the protruding regions R4 are pushed and bent, the blade portions 210 of the upper blades 21 cut into upper surfaces TS4 of the protruding regions R4. Due thereto, cut-in lines X1 are formed in the upper surfaces TS4 of the protruding regions R4. The cut-in lines X1 extend rectilinearly along the front-rear direction from the ends at the front sides of the protruding regions R4 to the ends at the rear sides thereof.

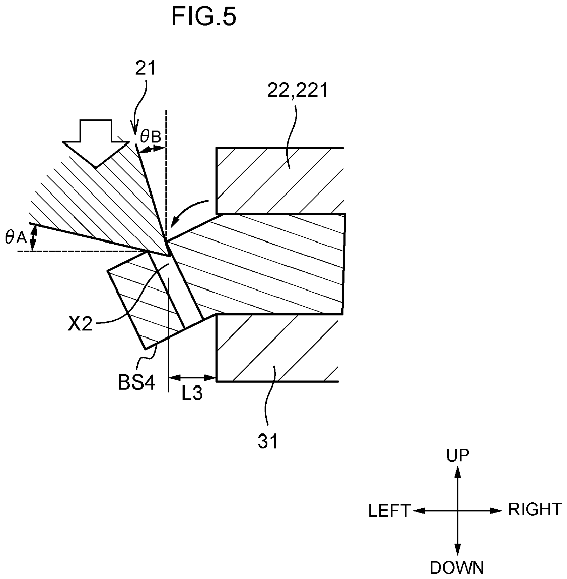

Next, when the upper die 2 is moved even further toward the lower side, as illustrated in Fig. 5, fissures X2, whose origins are the cut-in lines X1 of the protruding regions R4, reach bottom surfaces BS4 of the protruding regions R4. Namely, breaks, whose origins are the cut-in lines X1, of the layered electrode sheet 4 are formed.

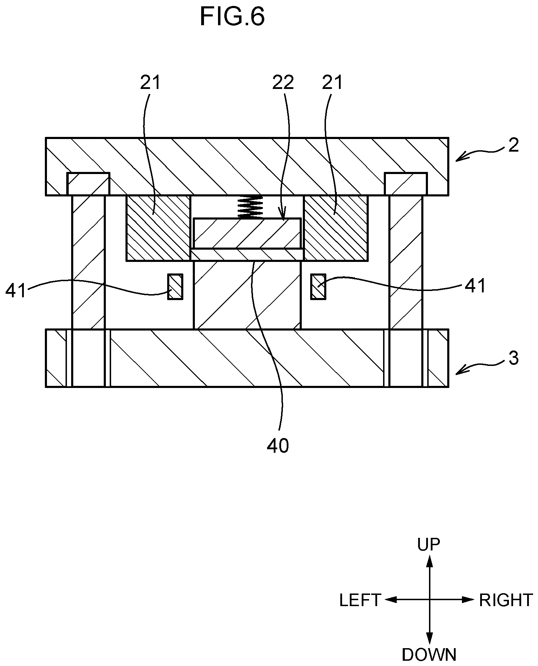

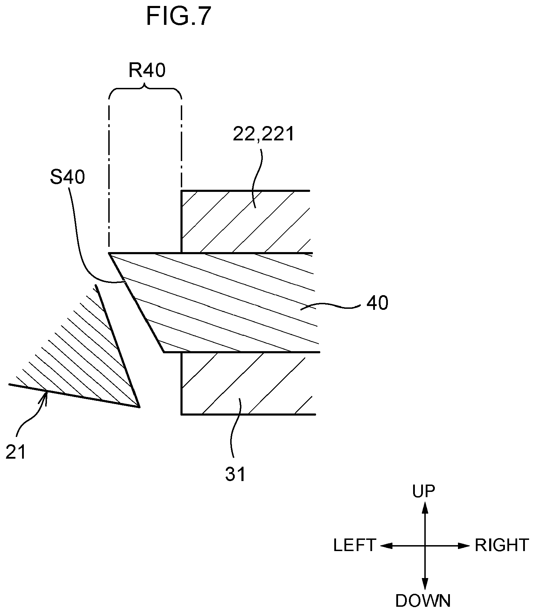

Next, when the upper die 2 is moved even further toward the lower side, as illustrated in Fig. 6, the offcuts 41 are separated from the layered electrode sheet 4. Due thereto, the layered electrode precursor 40 is obtained. When the offcuts 41 are separated from the layered electrode sheet 4, as illustrated in Fig. 7, regions R40, which protrude outward from the contacting member 221 and the lower blade 31, of the layered electrode precursor 40 (hereinafter also called "protruding regions R40") are released from the pushing of the upper blades 21, and the layered electrode sheet 4 deforms so as to return to the state before being pushed by the upper blades 21.

### (1.6) Layered Electrode Sheet

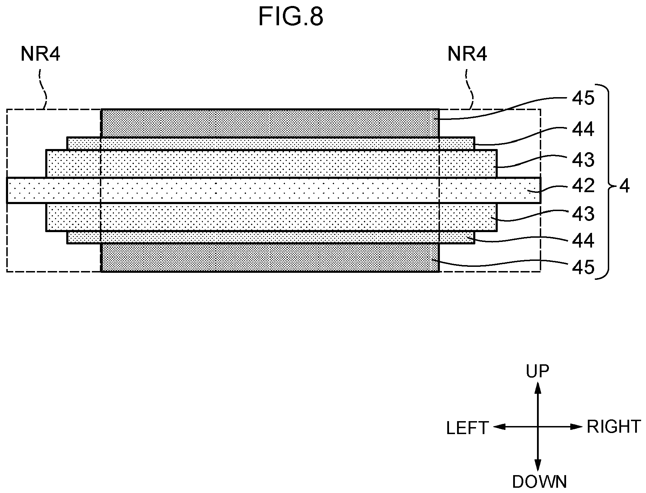

As illustrated in Fig. 8, at the layered electrode sheet 4, negative electrode active material sheets 43 that are an example of the first active material sheets, solid electrolyte sheets 44, and positive electrode active material sheets 45 that are an example of the second active material sheets are layered in that order along the vertical direction on both surfaces of a negative electrode collector sheet 42 that is an example of the first collector sheet. The layered electrode sheet 4 does not have negative electrode collector sheets on the positive electrode active material sheets 45.

The layered electrode sheet 4 has, at the left-right direction both end portions thereof, regions NR4 that do not function as power generating elements (hereinafter also called "non power generating regions NR4"). At the non power generating regions NR4, the negative electrode active material sheets 43 and the positive electrode active material sheets 45 do not face one another via the solid electrolyte sheets 44 in the vertical direction.

The length L4 of the layered electrode sheet 4 in the vertical direction is 0.2 mm for example. The length of the layered electrode sheet 4 in the front-rear direction is 70 mm for example.

### (1.6.1) Negative Electrode Collector Sheet

Examples of the material of the negative electrode collector sheet 42 are stainless steel, aluminum, copper, nickel, iron, titanium, carbon and the like, and copper is preferable. Examples of the form of the negative electrode collector sheet 42 are the form of a foil and the form of a mesh. The negative electrode collector sheet 42 may be a structure in which shock-absorbing layers, elastic layers or PTC (Positive Temperature Coefficient) thermistor layers are disposed on the surfaces thereof.

### (1.6.2) Negative Electrode Active Material Sheets

The negative electrode active material sheets 43 contain a negative electrode active material. Examples of the negative electrode active material are Li-based active materials such as metallic lithium and the like, carbon-based active materials such as graphite and the like, oxide-based active materials such as lithium titanate and the like, and Si-based active materials such as elemental Si and the like.

The negative electrode active material sheets 43 may, as needed, contain at least one of a solid electrolyte for the negative electrode, a conduction assistant and a binder. Examples of the solid electrolyte for the negative electrode and the binder are the same as those exemplified as the solid electrolyte and the binder that are contained in the solid electrolyte layers contained in the solid electrolyte sheets 44 that are described later.

Examples of the conduction assistant are carbon materials, metal materials, and conductive polymer materials. Examples of the carbon materials are carbon black (e.g., acetylene black, furnace black, ketjen black, and the like), filamentous carbon (e.g., vapor grown carbon fibers, carbon nanotubes, carbon nanofibers, and the like), graphite, fluorocarbons, and the like. Examples of the metal materials are metal powders (e.g., aluminum powder and the like), conductive whiskers (e.g., zinc oxide, potassium titanate, and the like), conductive metal oxides (e.g., titanium oxide and the like), and the like. Examples of the conductive polymer materials are polyaniline, polypyrrole, polythiophene, and the like. One type of conduction assistant may be used alone, or two or more types may be used by being mixed together.

### (1.6.3) Solid Electrolyte Sheets

The solid electrolyte sheets 44 preferably contain one selected from the group consisting of sulfide solid electrolytes, oxide solid electrolytes, and halide solid electrolytes.

The sulfide solid electrolyte preferably contains sulfur (S) as the main component that is an anion element, and further, preferably contains, for example, the element Li and element A. Element A is at least one type selected from the group consisting of P, As, Sb, Si, Ge, Sn, B, Al, Ga and In. The sulfide solid electrolyte may further contain at least one of O and a halogen element. Examples of the halogen element (X) are F, Cl, Br, I and the like. The composition of the sulfide solid electrolyte is not particularly limited, and examples are xLi₂S·(100 - x) P₂S₅ (70 ≤ x ≤ 80) and yLiI·zLiBr·(100-y-z)(xLi₂S·(1-x)P₂S₅) (0.7 ≤ x ≤ 0.8, 0 ≤ y ≤ 30, 0 ≤ z ≤ 30). The sulfide solid electrolyte may have the composition expressed by following general formula (1).

formula (1): Li₄₋ₓGe₁₋ₓPₓS₄ (0 < x < 1)

In formula (1), at least a portion of Ge may be substituted by at least one selected from the group consisting of Sb, Si, Sn, B, Al, Ga, In, Ti, Zr, V and Nb. Further, at least a portion of P may be substituted by at least one selected from the group consisting of Sb, Si, Sn, B, Al, Ga, In, Ti, Zr, V and Nb. A portion of Li may be substituted by at least one selected from the group consisting of Na, K, Mg, Ca and Zn. A portion of S may be substituted by a halogen. The halogen is at least one of F, Cl, Br and I.

The oxide solid electrolyte preferably contains oxygen (O) as the main component that is an anion element, and, for example, may contain Li, element Q (Q represents at least one of Nb, B, Al, Si, P, Ti, Zr, Mo, W and S), and O. Examples of the oxide solid electrolyte are garnet type solid electrolytes, perovskite type solid electrolytes, NASICON type solid electrolytes, Li-P-O solid electrolytes, Li-B-O solid electrolytes, and the like. Examples of garnet type solid electrolytes are Li₇La₃Zr₂O₁₂, Li₇₋ₓLa₃(Zr₂₋ₓNbₓ)O₁₂ (0 ≤ x ≤ 2), Li₅La₃Nb₂O₁₂, and the like. Examples of perovskite type solid electrolytes are (Li,La)TiO₃, (Li,La)NbO₃, (Li,Sr)(Ta,Zr)O₃ and the like. Examples of NASICON type solid electrolytes are Li(Al,Ti)(PO₄)₃, Li(Al,Ga)(PO₄)₃, and the like. Examples of Li-P-O solid electrolytes are Li₃PO₄ and LIPON (compounds in which some of the O in Li₃PO₄ is substituted with N). Examples of Li-B-O solid electrolytes are Li₃BO₃, compounds in which some of the O in Li₃BO₃ is substituted with C, and the like.

As the halide solid electrolyte, solid electrolytes containing Li, M and X (M represents at least one of Ti, Al and Y, and X represents F, Cl or Br) are suitable. Specifically, Li_{6-3z}Y_{z}X₆ (X represents Cl or Br, and z satisfies 0 < z < 2) and Li_{6-(4-x)b}(Ti₁₋ₓAlₓ)_{b}F₆ (0 < x < 1, 0 < b ≤ 1.5) are preferable. Among Li₆-_{3z}Y_{z}X₆, from the standpoint of having excellent lithium ion conductivity, Li₃YX₆ (X represents Cl or Br) is more preferable, and Li₃YCl₆ is even more preferable. Further, from standpoints such as, for example, suppressing oxidative decomposition of the sulfide solid electrolyte and the like, it is preferable that Li_{6-(4-x)b}(Ti₁₋ₓAlₓ)_{b}F₆ (0 < x < 1, 0 < b ≤ 1.5) be contained together with a solid electrolyte such as a sulfide solid electrolyte or the like.

The solid electrolyte sheets 44 may be a single layer structure, or may be a multilayer structure of two or more layers.

The solid electrolyte sheets 44 may contain a binder, or may not contain a binder. Examples of binders that can be contained in the solid electrolyte sheets 44 are vinyl halide resins, rubbers, polyolefin resins, and the like. Examples of vinyl halide resins are polyvinylidene fluoride (PVdF), the copolymer (PVdF-HFP) of polyvinylidene fluoride and hexafluoropropylene, and the like. Examples of polyolefin resins are butadiene rubber (BR), acrylate-butadiene rubber (ABR), styrene-butadiene rubber (SBR), acrylonitrile-butadiene rubber (NBR), butyl rubber (isobutylene-isoprene rubber), and the like. Examples of polyolefin resins are polyethylene, polypropylene, and the like. The binder may be a diene rubber containing a double bond in the main chain, e.g., butadiene rubber in which 30 mol% or more of the entire amount is butadiene.

### (1.6.4) Positive Electrode Active Material Sheets

The positive electrode active material sheets 45 contain a positive electrode active material. As needed, the positive electrode active material sheets 45 may contain at least one of a solid electrolyte for the positive electrode, a conduction assistant and a binder.

It is preferable that a lithium composite oxide be contained as the positive electrode active material. The lithium composite oxide may contain at least one type selected from the group consisting of F, Cl, N, S, Br and I. Further, the lithium composite oxide may have a crystal structure belonging to at least one space group selected from space groups R-3m, Immm, and P63-mmc (also called P63mc, P6/mmc). In the lithium composite oxide, the main sequence of a transition metal, oxygen and lithium may be an O2-type structure.

Examples of lithium composite oxides having a crystal structure belonging to R-3m are compounds expressed by LiₓMe_{y}O_{α}X_{β} (Me represents at least one type selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si and P, and X represents at least one type selected from the group consisting of F, Cl, N, S, Br and I, and 0.5 ≤ x ≤ 1.5, 0.5 ≤ y ≤ 1.0, 1 ≤ α < 2, 0 < β ≤ 1 are satisfied).

Examples of lithium composite oxides having a crystal structure belonging to Immm are composite oxides expressed by Liₓ₁M¹A¹₂ (1.5 ≤ x1 ≤ 2.3 is satisfied, M¹ includes at least one type selected from the group consisting of Ni, Co, Mn, Cu and Fe, A¹ includes at least oxygen, and the ratio of the oxygen contained in A¹ is greater than or equal to 85 atom%) (a specific example is Li₂NiO₂), and composite oxides expressed by Liₓ₁M^{1A}₁₋ₓ₂M^{1B}ₓ₂O_{2-y}A²_{y} (0 ≤ x2 ≤ 0.5 and 0 ≤ y ≤ 0.3, at least one of x2 and y is not 0, M^{1A} represents at least one type selected from the group consisting of Ni, Co, Mn, Cu and Fe, M^{1B} represents at least one type selected from the group consisting of Al, Mg, Sc, Ti, Cr, V, Zn, Ga, Zr, Mo, Nb, Ta and W, and A² represents at least one type selected from the group consisting of F, Cl, Br, S and P).

Examples of lithium composite oxides having a crystal structure belonging to P63-mmc are composite oxides expressed by M1ₓM2_{y}O₂ (M1 represents an alkali metal (at least one of Na and K is preferable), M2 represents a transition metal (at least one type selected from the group consisting of Mn, Ni, Co and Fe is preferable), and x+y satisfies 0 < x+y ≤ 2).

Examples of lithium composite oxides having an O2-type structure are composite oxides expressed by Liₓ[Li_{α}(MnₐCo_{b}M_{c})_{1-α}]O₂ (0.5 < x < 1.1, 0.1 < α < 0.33, 0.17 < a < 0.93, 0.03 < b < 0.50, 0.04 < c < 0.33, and M represents at least one type selected from the group consisting of Ni, Mg, Ti, Fe, Sn, Zr, Nb, Mo, W and Bi). Specific examples are Li_{0.744}[Li_{0.145}Mn_{0.625}Co_{0.115}Ni_{0.115}]O₂ and the like.

The solid electrolyte for the positive electrode preferably includes one selected from the group consisting of sulfide solid electrolytes, oxide solid electrolytes and halide solid electrolytes. Examples of the sulfide solid electrolytes are the same as those exemplified as the sulfide solid electrolyte that is included in the solid electrolyte. Examples of the oxide solid electrolytes are the same as those exemplified as the oxide solid electrolyte that is included in the solid electrolyte. Examples of the halide solid electrolytes are the same as those exemplified as the halide solid electrolyte that is included in the solid electrolyte.

Examples of the binder are the same as those exemplified as the binder that is contained in the solid electrolyte layers.

### (1.7) Operation and Effects

As described with reference to Fig. 1 through Fig. 7, the push-breaking device 1 has the lower blade 31, the pressing mechanism 22 and the two upper blades 21. At the push-breaking device 1, portions of the protruding regions R4 of the layered electrode sheet 4 that is pressed by the pressing mechanism 22 are pushed and bent and are broken by the two upper blades 21 that move relative to the lower blade 31 along the vertical direction. The rake angle θA is 15° ~ 30°. The relief angle θB is an acute angle. The length L3 of the clearance is 10% ~ 35% of the length L4 of the layered electrode sheet 4.

Due thereto, the push-breaking device 1 can separate the layered electrode sheet 4 into desired dimensions while suppressing the occurrence of inter-layer short circuiting and the generation of cracks.

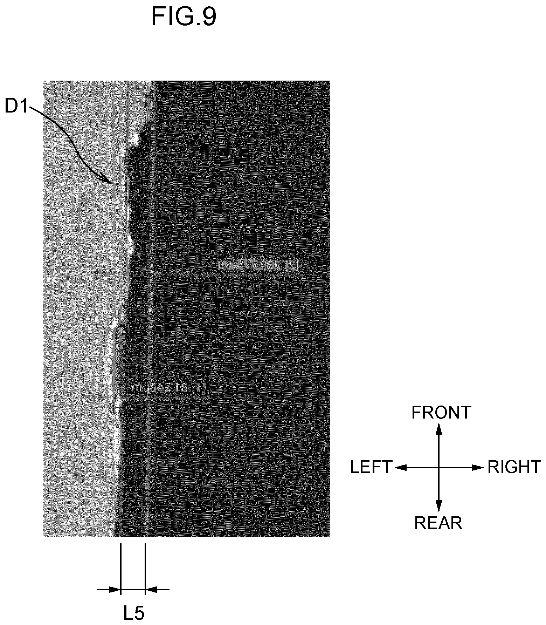

The present inventors cut the layered electrode sheet 4 by using a device similar to the push-breaking device 1, except that the rake angle θA was changed to be less than 15° (concretely, 0°, 5°, 10°). A top view of a cut region of the layered electrode sheet 4 that was cut is illustrated in Fig. 9. As illustrated in Fig. 9, it was learned that shape D1 of the end of the cut region of the layered electrode was sawtooth shaped. In the left-right direction, distance L5 between the peak of the convex portion and the bottom of the concave portion of the shape D1 of the end of the cut region of the layered electrode was not less than 100 µm. This is assumed to be due to the following reason. Namely, if the rake angle θA is less than 15°, it is difficult for the blade portion 210 of the upper blade 21 to cut into the protruding region R4, and it is difficult for the linear cut-in line X1 to be formed stably. Due thereto, a break whose origin is the cut-in line X1 was not generated. It is assumed that the shape D1 of the end of the cut region of the layered electrode was therefore sawtooth shaped. As a result, it was learned by experimentation that, if the rake angle θA is less than 15°, it is difficult for the layered electrode sheet 4 to be separated into the desired dimensions.

The present inventors cut the layered electrode sheet 4 by using a device similar to the push-breaking device 1, except that the rake angle θA was changed to exceed 30° (concretely, 45°, 60°). When observing, with the naked eye, the cut cross-section of the layered electrode sheet 4 that had been cut, the borders between the respective layers structuring the layered electrode sheet 4 could not be distinguished clearly. This is assumed to be due to the following reason. Namely, it is assumed that crush-cutting of the protruding region R4 was carried out by the blade portion 210 of the upper blade 21, and, at this time, the blade portion 210 of the upper blade 21 and separated surface S40 of the layered electrode precursor 40 rubbed against one another. As a result, it was learned by experimentation that, if rake angle θA exceeds 30°, it is difficult to separate the layered electrode sheet 4 while suppressing the occurrence of inter-layer short circuiting.

The present inventors cut the layered electrode sheet 4 by using a device similar to the push-breaking device 1, except that the relief angle was changed to 0°. When observing, with the naked eye, the cut cross-section of the layered electrode sheet 4 that had been cut, the borders between the respective layers structuring the layered electrode sheet 4 could not be distinguished clearly. Moreover, powder resulting from the material of the layered electrode sheet 4 was scattered on the floor in the vicinity of the device. It is assumed that this is because, after the offcuts 41 were separated from the layered electrode sheet 4, the blade portions 210 of the upper blades 21 and the separated surfaces S40 of the layered electrode precursor 40 rubbed against one another. As a result, it was learned by experimentation that, if the relief angle is not an acute angle, it is difficult to separate the layered electrode sheet 4 while suppressing the occurrence of inter-layer short circuiting.

The present inventors cut the layered electrode sheet 4 by using a device similar to the push-breaking device 1, except that the length L3 of the clearance was made to be less than 10% of the length L4 of the layered electrode sheet 4. When observing, with the naked eye, the cut cross-section of the layered electrode sheet 4 that had been cut, the borders between the respective layers structuring the layered electrode sheet 4 could not be distinguished clearly. This is assumed to be because the protruding regions R4 were cut without being pushed and bent by the upper blades 21, and the separated surfaces S40 of the layered electrode precursor 40 rubbed against the upper blades 21 and the offcuts 41. As a result, it was learned by experimentation that, if the length L3 of the clearance is made to be less than 10% of the length L4 of the layered electrode sheet 4, it is difficult to separate the layered electrode sheet 4 while suppressing the occurrence of inter-layer short circuiting.

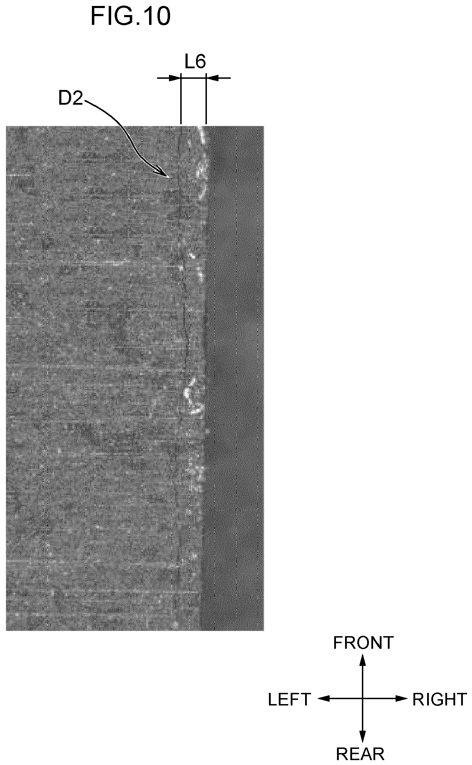

The present inventors cut the layered electrode sheet 4 by using a device similar to the push-breaking device 1, except that the length L3 of the clearance was made to exceed 35% of the length L4 of the layered electrode sheet 4. A top view of the cut region of the layered electrode sheet 4 that had been cut is illustrated in Fig. 10. As illustrated in Fig. 10, a crack D2 was confirmed at a position that was apart in the left-right direction by distance L6 (approximately 70 µm) toward the central side from the end of the cut region of the surface of the layered electrode sheet 4. This crack D2 extended rectilinearly along the front-rear direction. It is assumed that this is because, at the time when the moving upper blades 21 pushed and bent the protruding regions R4, stress concentrated at regions CR4 of the layered electrode sheet 4 that are in vicinities of the ends 2210, which are at the sides of the upper blades 21, of the pressing mechanism 22. As a result, it was learned by experimentation that, if the length L3 of the clearance exceeds 35% of the length L4 of the layered electrode sheet 4, it is difficult to separate the layered electrode sheet 4 while suppressing the generation of cracks.

As described with reference to Fig. 1 through Fig. 7, at the push-breaking device 1, the pressing mechanism 22 has the contacting member 221. In the left-right direction, the positions of the ends 2210, at a side of the upper blade 21, of the contacting member 221 are at the same positions as the positions of the ends, at the upper blade 21 sides, of the lower blades 31 (i.e., the blade portions 310).
Due thereto, at the time when the moving upper blades 21 push and bend the protruding regions R4, it is difficult for stress to concentrate at the regions CR4 of the layered electrode sheet 4 that are in vicinities of the ends 2210, which are at the upper blade 21 sides, of the pressing mechanism 22. As a result, the push-breaking device 1 can separate the layered electrode sheet 4 while better suppressing the generation of cracks.

As described with reference to Fig. 1 through Fig. 7, at the push-breaking device 1, the relief angle is 5° ~ 15°.

Due thereto, it is difficult for the layered electrode precursor 40, which is obtained by the offcuts 41 being separated, to rub against the upper blades 21. As a result, the push-breaking device 1 can separate the layered electrode sheet 4 while better suppressing the occurrence of inter-layer short circuiting.

As described with reference to Fig. 1 through Fig. 7, at the push-breaking device 1, the length L3 of the clearance is 20 µm ~ 50 µm.

Due thereto, the push-breaking device 1 can separate the layered electrode sheet 4 into desired dimensions while suppressing the occurrence of inter-layer short circuiting and the generation of cracks. The length L4 of the layered electrode sheet 4 in the vertical direction is, for example, 0.2 mm.

As described with reference to Fig. 1 through Fig. 7, the push-breaking device 1 further has the lower die holder 32 and the upper die holder 24. The upper blades 21 and the pressing mechanism 22 are mounted at the upper die holder 24. The lower blade 31 is mounted at the lower die holder 32.

Due thereto, the push-breaking device 1 can efficiently separate the layered electrode sheet 4 by a simple structure.

As described with reference to Fig. 1 through Fig. 7, the push-breaking device 1 has the upper blades 21 and the lower blade 31.

Due thereto, the push-breaking device 1 can efficiently separate the layered electrode sheet 4.

### (2) Method of Manufacturing Layered Electrode

The method of manufacturing a layered electrode relating to the present embodiment manufactures a layered electrode by using the push-breaking device 1. The method of manufacturing a layered electrode relating to the present embodiment includes a preparation step, a placement step, a push-breaking step, and a layering step. The preparation step, the placement step, the push-breaking step and the layering step are executed in that order.

### (2.1) Laminated Battery

The laminated battery is formed by negative electrode active material layers, solid electrolyte layers, positive electrode active material layers and positive electrode collectors being layered in that order along the vertical direction on the both surfaces of a negative electrode collector. In other words, the laminated battery has the layered electrode precursor 40, and two positive electrode collectors that are layered on the two positive electrode active material layers of the layered electrode precursor 40. A first collector sheet, first active material sheets, insulating sheets and second active material sheets that are included in the layered electrode sheet are broken, and function as a first collector, first active material layers, insulating layers and second active material layers. The negative electrode collector sheet 42, the negative electrode active material sheets 43, the solid electrolyte sheets 44 and the positive electrode active material sheets 45 that are contained in the layered electrode sheet are broken, and become a negative electrode collector, negative electrode active material layers, solid electrolyte layers and negative electrode active material layers that are included in a layered electrode.

Examples of the positive electrode collector are stainless steel, aluminum, copper, nickel, iron, titanium, carbon and the like, and an aluminum alloy foil or an aluminum foil is preferable. The aluminum alloy foil or aluminum foil may be manufactured by using a powder. The form of the positive electrode collector is, for example, the form of a foil or the form of a mesh.

The positive electrode collector may have a positive electrode collector tab. The positive electrode collector tab is electrically connected to a positive electrode terminal of a layered electrode that is described later. The positive electrode collector tab may extend toward one side in the left-right direction from a region corresponding to one end in the left-right direction of the positive electrode active material layer of the positive electrode collector. The positive electrode collector may be a structure in which a shock-absorbing layer, an elastic layer or a PTC (Positive Temperature Coefficient) thermistor layer is disposed on the surface.

### (2.2) Preparation Step

In the preparation step, the layered electrode sheet 4 is prepared. The method of preparing the layered electrode sheet 4 is not particularly limited, and it suffices for the method to be a known method.

### (2.3) Placement Step

In the placement step, the layered electrode sheet 4 is placed on the lower blade 31 such that the protruding regions R4 of the layered electrode sheet 4 are formed. The method of placing the layered electrode sheet 4 on the lower blade 31 is not particularly limited, and it suffices for the method to be a known method.

### (2.4) Push-Breaking Step

In the push-breaking step, the upper die 2 that includes the two upper blades 21 is moved toward the lower side, and portions of the protruding regions R4 of the layered electrode sheet 4 are pushed and bent and break. In the present embodiment, portions of the protruding regions R4 are pushed and bent and are broken merely by moving the upper die 2 toward the lower side. Due thereto, the layered electrode precursor 40, at which the offcuts 41 are separated from the layered electrode sheet 4, is obtained. The method of moving the upper die 2 is not particularly limited, and it suffices for the method to be a known method. If the push-breaking device 1 has the above-described driving means, the upper die 2 may be moved by the driving means. If the push-breaking device 1 does not have the above-described driving means, the upper die 2 may be moved manually. The speed of moving the upper die 2 is not particularly limited, and is, for example 30 mm/second.

### (2.5) Layering Step

In the layering step, positive electrode collectors are layered on the positive electrode active material layers (i.e., the two positive electrode active material layers of the layered electrode precursor 40) that are obtained from the positive electrode active material sheets 45 by execution of the push-breaking step. A laminated battery is thereby obtained. The method of layering the positive electrode collectors on the positive electrode active material layers is not particularly limited, and it suffices for the method to be a known method.

### (2.6) Operation and Effects

The method of manufacturing a layered electrode relating to the present embodiment manufactures a layered electrode by using the push-breaking device 1. The method of manufacturing a layered electrode relating to the present embodiment includes the preparation step, the placement step and the push-breaking step.

The method of manufacturing an electrode of the present embodiment can manufacture a layered electrode sheet that has desired dimensions, while suppressing the occurrence of inter-layer short circuiting and the generation of cracks.

In the method of manufacturing a layered electrode relating to the present embodiment, the layered electrode sheet 4 is formed by the negative electrode active material sheets 43, the solid electrolyte sheets 44, and the positive electrode active material sheets 45 being layered in that order along the first direction on the both surfaces of the negative electrode collector sheet 42. The method of manufacturing a layered electrode relating to the present embodiment further includes the layering step.

Due thereto, a layered electrode that has desired dimensions can be manufactured while better suppressing the occurrence of inter-layer short circuiting and the generation of cracks.

### (3) Method of Manufacturing Laminated Battery

The method of manufacturing a laminated battery relating to the present embodiment includes manufacturing a layered electrode by the method of manufacturing a laminated electrode relating to the present embodiment (hereinafter also called "electrode manufacturing step").

### (3.1) Layered Electrode

The layered electrode has at least one layered electrode, a positive electrode terminal, a negative electrode terminal, and an exterior body. The positive electrode terminal is electrically connected to a positive electrode collector that is included in the layered electrode. The negative electrode terminal is electrically connected to a negative electrode collector that is included in the layered electrode. The exterior body accommodates the at least one layered electrode, the positive electrode terminal and the negative electrode terminal such that the positive electrode terminal and the negative electrode terminal are electrically connected to the exterior.

The number of layered electrodes is appropriately selected in accordance with the intended use of the layered electrode, and the like. In a case in which there are plural layered electrodes, the plural layered electrodes may be layered along the vertical direction for example.

The shapes and sizes and the like of the positive electrode terminal and the negative electrode terminal are appropriately selected in accordance with the intended use of the layered electrode and the like. Examples of the materials of the positive electrode terminal and the negative electrode terminal are metals (e.g., stainless steel (SUS) and the like), and the like.

The exterior body is not particularly limited, and examples thereof are laminate exterior bodies, metal canisters (e.g., square, cylindrical or the like), and the like. The shape and size and the like of exterior body are appropriately selected in accordance with the intended use of the layered electrode and the like.

### (3.2) Electrode Manufacturing Step

The method of manufacturing a laminated battery relating to the present embodiment includes an electrode manufacturing step.

In the electrode manufacturing step, a layered electrode is manufactured by the method of manufacturing a laminated electrode relating to the present embodiment.

### (3.3) Other Steps

The method of manufacturing a laminated battery relating to the present embodiment may include other steps. These other steps include general steps for manufacturing batteries. Examples of these other steps are a step of layering plural layered electrodes so as to prepare an electrode layered body, a step of accommodating the electrode layered body in an exterior body (e.g., a laminated film, a canister or the like), a step of electrically connecting the plural negative electrode collectors that are contained in the electrode layered body to at least one negative electrode terminal, a step of electrically connecting the plural positive electrode collectors that are contained in the electrode layered body to at least one positive electrode terminal, and the like.

### (3.4) Operation and Effects

The method of manufacturing a laminated battery relating to the present embodiment includes the electrode manufacturing step.

Due thereto, the method of manufacturing a laminated battery relating to the present embodiment can manufacture a laminated battery having a layered electrode in which the occurrence of inter-layer short circuiting and the generation of cracks are suppressed and that has desired dimensions.

### (4) Modified Examples

In the present embodiment, the positions of the ends 2210, which are at the upper blade 21 sides, of the contacting member 221 are at the same positions as the positions of the ends, which are at the upper blade 21 sides, of the lower blade 31 (i.e., the blade portions 310), but may be positions that are further toward the upper blade 21 sides than the positions of the ends, which are at the upper blade 21 sides, of the lower blade 31 (i.e., the blade portions 310).

In the present embodiment, the relief angle θB is 5° ~ 15°, but the relief angle θB may be other than 5° ~ 15° provided that it is an acute angle.

In the present embodiment, the length L3 of the clearance is 20 µm ~ 50 µm. However, provided that the length L3 is 10% ~ 35% of the length L4 of the layered electrode sheet 4 in the left-right direction, the length L3 may be outside of this range of 20 µm ~ 50 µm.

In the present embodiment, the push-breaking device 1 has the upper die holder 24 and the lower die holder 32, but does not have to have at least one of the upper die holder 24 and the lower die holder 32.

In the present embodiment, the push-breaking device 1 has the lower blade 31. However, the push-breaking device 1 does not have to have the lower blade 31 provided that it has a placement stand on which the layered electrode sheet 4 is placed.

The method of manufacturing a layered electrode of the present embodiment includes the layering step, but does not have to include the layering step.

In the present embodiment, the layered electrode sheet 4 is formed by the negative electrode active material sheets 43, the solid electrolyte sheets 44, and the positive electrode active material sheets 45 being layered in that order along the vertical direction on the both surfaces of the negative electrode collector sheet 42. However, the present disclosure is not limited to this. The layered electrode sheet may be formed by the positive electrode active material sheets 45, the solid electrolyte sheets 44, and the negative electrode active material sheets 43 being layered in that order along the vertical direction on the both surfaces of a positive electrode collector sheet. In the present disclosure, separators of lithium secondary batteries using non-aqueous electrolytes may be used instead of the solid electrolyte sheets 44.

In the present embodiment, the laminated battery sheet is a battery sheet used in lithium secondary batteries that use a solid electrolyte, but may be a battery sheet that is used in secondary batteries (nickel-hydrogen batteries or the like).

In the present embodiment, the angle θC formed by the end surface S310A and the contacting surface S310B of the lower blade 31 is 90°, but may be less than 90°.

## Claims

1. A push-breaking device, comprising:
a placement stand on which a layered electrode sheet is placed;
a pressing mechanism pressing the layered electrode sheet placed on the placement stand; and
at least one cutting blade tool,
the push-breaking device configured such that by means of the at least one cutting blade tool, which moves relative to the placement stand along a first direction, the push-breaking device pushes and bends, and breaks, a portion of a protruding region, which protrudes outward from the placement stand and the pressing mechanism, of the layered electrode sheet, which is pressed by the pressing mechanism in a second direction that is orthogonal to the first direction, wherein:
an angle of a blade portion of the cutting blade tool with respect to the second direction is from 15° to 30°,
an angle of the blade portion with respect to the first direction is an acute angle, and
a length, in the second direction, of a clearance between the blade portion and an end, at a side of the cutting blade tool, of the placement stand is from 10% to 35% of a length of the layered electrode sheet in the first direction.

2. The push-breaking device of claim 1, wherein:
the pressing mechanism has a contacting member that contacts the layered electrode sheet when the pressing mechanism presses the layered electrode sheet, and
in the second direction, a position of an end, at a side of the cutting blade tool, of the contacting member is at a same position as a position of the end, at the cutting blade tool side, of the placement stand, or is a position that is further toward the cutting blade tool side than the position of the end, at the cutting blade tool side, of the placement stand.

3. The push-breaking device of claim 1, wherein an angle of the blade portion with respect to the first direction is from 5° to 15°.

4. The push-breaking device of claim 1, wherein a length of the clearance in the second direction is from 20 µm to 50 µm.

5. The push-breaking device of claim 1, further comprising a lower die holder, and an upper die holder disposed so as to face the lower die holder and configured to move along the first direction relative to the lower die holder, wherein:
the first direction is parallel to a gravitational direction,
the blade and the pressing mechanism are mounted at the upper die holder, and
the placement stand is mounted at the lower die holder.

6. The push-breaking device of claim 5, wherein:
the cutting blade tool comprises an upper blade, and
the placement stand comprises a lower blade.

7. A method of manufacturing a layered electrode that manufactures a layered electrode by using the push-breaking device of any one of claim 1 through claim 6, the method comprising:
preparing the layered electrode sheet;
placing the layered electrode sheet on the placement stand such that the protruding region is formed; and
moving the at least one cutting blade tool in the first direction, pushing and bending a portion of the protruding region, and breaking the layered electrode sheet.

8. The method of manufacturing a layered electrode of claim 7, wherein:
the layered electrode sheet is formed by a first active material sheet, a solid electrolyte sheet and a second active material sheet being layered in this order along the first direction on both surfaces of a first collector sheet, and
the method further comprises layering a second collector on a second active material layer obtained from the second active material sheet as a result of implementation of the push-breaking.

9. A method of manufacturing a laminated battery, the method comprising manufacturing a layered electrode by the method of manufacturing a layered electrode of claim 7.
